# EUROPEAN PATENT APPLICATION

(11) **EP 4 813 706 A1**
(43) Date of publication of application: **30.09.2026**
(21) Application number: 26166990.7
(22) Date of filing: 24.03.2026
(51) Int. Cl.: B60K 1/04

(54) **VEHICLE LOWER SECTION STRUCTURE**

(30) Priority: 26.03.2025 JP 2025052170
(71) Applicant: Toyota Jidosha Kabushiki Kaisha, Toyota-shi, Aichi-ken 471-8571 (JP)
(72) Inventor: KAWAMOTO, Naoya, Toyota-shi, Aichi-ken 471-8571 (JP); FUJIWARA, Nobuyoshi, Toyota-shi, Aichi-ken 471-8571 (JP); KUMAZAWA, Kazuya, Toyota-shi, Aichi-ken 471-8571 (JP); KIMURA, Kenta, Toyota-shi, Aichi-ken 471-8571 (JP)
(74) Representative: TBK

(57) **Abstract**

A vehicle lower section structure includes: a battery case installed to a vehicle lower section, wherein the battery case including a lower case configuring a housing section for housing a battery module, and an upper cover configuring the housing section together with the lower case; a first flange that is formed at an outer edge of the lower case so as to extend toward the outside of the housing section; a second flange that is formed at an outer edge of the upper cover so as to extend toward the outside of the housing section and that is joined to the first flange; and a wall portion that is arranged between a join section where the first flange and the second flange are joined and the battery module, and that overlaps with the join section in a side view of the battery case.

## Description

### BACKGROUND

### Technical Field

The present disclosure relates to a vehicle lower section structure.

### Related Art

Japanese Patent Application Laid-Open (JP-A) No. 2024-60206 discloses technology related to a sealing structure of a battery case installed to a vehicle. JP-A No. 2024-60206 describes flanges being formed to respective peripheral edge portions of a lower case and an upper case configuring the battery case. The flange of the lower case and the flange of the upper case are configured so as to be joined together with a sealing member and a fixing member interposed therebetween.

When cutting the join section between the lower case and the upper case (hereafter referred to as an "upper cover"), during maintenance or the like, were a battery (hereafter referred to as a battery module) housed inside the battery case to be hit by a cutter blade, the battery module might be damaged. JP-A No. 2024-60206 describes the flange of the lower case being provided at an upper side of the battery module housed inside the battery case, however there is room for improvement in the shape of the battery case from the perspective of suppressing damage to the battery module.

### SUMMARY

In consideration of the above circumstances, the present disclosure provides a vehicle lower section structure capable of avoiding damage to a battery module when cutting a join section between a lower case and an upper cover.

A vehicle lower section structure according to a first aspect includes a battery case installed to a vehicle lower section, wherein the battery case including a lower case configuring a housing section for housing a battery module, and an upper cover configuring the housing section together with the lower case; a first flange that is formed at an outer edge of the lower case so as to extend toward the outside of the housing section; a second flange that is formed at an outer edge of the upper cover so as to extend toward the outside of the housing section and that is joined to the first flange; and a wall portion that is arranged between a join section where the first flange and the second flange are joined and the battery module, and that overlaps with the join section in a side view of the battery case. a battery case installed to a vehicle lower section. The battery case includes a lower case configuring a housing section for housing a battery module, an upper cover configuring the housing section together with the lower case, a first flange that is formed to an outer edge of the lower case so as to extend toward the outside of the housing section, a second flange that is formed to an outer edge of the upper cover so as to extend toward the outside of the housing section and that is joined to the first flange, and a wall portion that is arranged between a join section where the first flange and the second flange are joined and the battery module, and that overlaps with the join section in a side view of the battery case.

In the vehicle lower section structure according to the first aspect, the battery case installed to the vehicle lower section includes the lower case and the upper cover. The housing section to house a battery module is configured by the lower case and the upper cover, with the upper cover joinable to the lower case. The first flange is formed to the outer edge of the lower case so as to extend toward the housing section outside. The second flange is formed to the outer edge of the upper cover so as to extend toward the housing section outside, with the second flange joined to the first flange. Furthermore, a wall portion is arranged so as to lie between the join section where the first flange and the second flange are joined, and the battery module, with the wall portion being provided so as to overlap with the join section in a side view of the battery case.

Thus in the present aspect, the wall portion is provided so as to overlap with the join section where the first flange and the second flange are joined in the side view of the battery case. This accordingly means that in the present aspect, even if, when cutting the join section during battery case maintenance or the like, a cutter blade entering between the first flange and the second flange was to intrude past the join section and into the housing section side of the battery case, the cutter blade would hit the wall portion and damage to the battery module would be suppressed thereby.

A vehicle lower section structure according to a second aspect is the vehicle lower section structure according to the first aspect, wherein the wall portion is formed at the lower case or to the upper cover.

In the vehicle lower section structure according to the second aspect, since the wall portion is formed at the lower case or to the upper cover, the number of components may be reduced compared to cases in which a separate member is provided as the wall portion.

A vehicle lower section structure according to a third aspect is the vehicle lower section structure according to the first aspect or the second aspect, wherein the wall portion is configured by an upward protrusion that is provided at an upper end portion of the lower case and that is formed so as to fold back in the vehicle height direction with an inflection point provided further upward than the join section.

In the vehicle lower section structure according to the third aspect, the wall portion is configured by the upward protrusion provided to the upper end portion of the lower case. This upward protrusion is formed so as to fold back in the vehicle height direction with the inflection point provided further upward than the join section and, therefore, the wall portion is configured by a state of two overlapping layers in a side view of the battery case. The present aspect thereby enables damage to the battery module to be further avoided.

Moreover, the upper cover is joined from above the lower case in a state in which the battery module has been housed inside the lower case. Providing the wall portion to the upper end portion of the lower case is preferable from the perspective of ease of assembly compared to cases in which a downward protrusion is provided on the upper cover side.

As described above, the vehicle lower section structure according to the present disclosure enables damage to a battery module to be suppressed when cutting a join section between a lower case and an upper cover.

### BRIEF DESCRIPTION OF THE DRAWINGS

Exemplary embodiments of the present disclosure will be described in detail based on the following figures, wherein:
Fig. 1 is a schematic exploded perspective view illustrating a configuration of a vehicle applied with a vehicle lower section structure according to an exemplary embodiment;
Fig. 2 is a schematic plan view illustrating a vehicle lower section structure according to an exemplary embodiment;
Fig. 3 is a schematic cross-section of the vehicle lower section structure illustrated in Fig. 2 when sectioned along the vehicle front-rear direction;
Fig. 4 is a schematic cross-section of the vehicle lower section structure illustrated in Fig. 2 when sectioned along the vehicle width direction; and
Fig. 5 is a schematic end view illustrating the vehicle lower section structure illustrated in Fig. 1 when sectioned along line A-A.

### DETAILED DESCRIPTION

Description follows regarding a vehicle lower section structure according to an exemplary embodiment of the present disclosure, with reference to the drawings. Note that the same or similar reference numerals will be appended across the drawings to the same or equivalent members, and explanation thereof will be omitted. Furthermore, when plural of the same or equivalent members are included in the drawings, in order to enhance drawing clarity, reference numerals may be only appended to some thereof. Arrow FR in the drawings illustrates a vehicle front-rear direction forward direction, and arrow UP illustrates an upward direction in a vehicle height direction. Arrow RH illustrates a rightward direction in a vehicle width direction, and illustrates the vehicle width direction outside in the present exemplary embodiment. Moreover, when simply front and rear, up and down, and left and right directions are employed in the following description, unless explicitly stated otherwise, these respectively indicate front and rear in the vehicle front-rear direction, up and down in the vehicle height direction, and left and right in the vehicle left-right direction (vehicle width direction).

### Vehicle Lower Section Structure Configuration

Firstly, description follows regarding a configuration of a vehicle applied with the vehicle lower section structure according to an exemplary embodiment of the present disclosure.

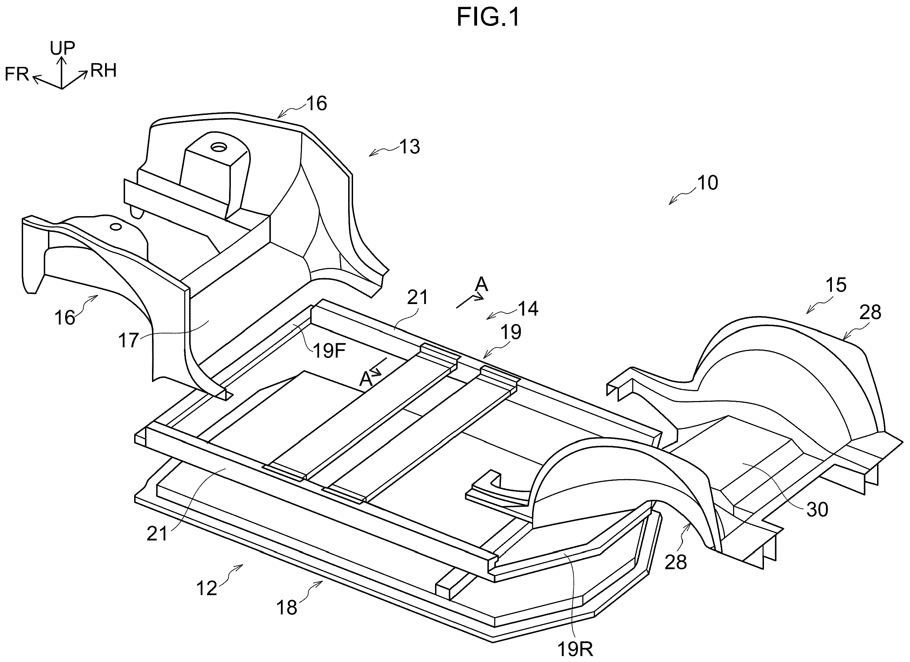

Fig. 1 is an exploded perspective view of a vehicle 10 applied with a vehicle lower section structure 12 according to the present exemplary embodiment. In the present exemplary embodiment, the vehicle 10 is sectioned into a vehicle front section (hereafter referred to as "front module") 13, a vehicle central section (hereafter referred to as "center module") 14, and a vehicle rear section (hereafter referred to as "rear module") 15.

For example, the front module 13 includes a left-right pair of wheel arches 16 capable of accommodating wheels (omitted in the drawings), and a cross member 17 connecting the left-right pair of wheel arches 16 together. Note that the wheel arches 16 and the cross member 17 are integrally molded together (integrated) by die-casting using a material such as an aluminum alloy, a magnesium alloy, or the like.

The center module 14 includes a storage battery pack (battery case) 18. The storage battery pack 18 is, for example, made from a light metal such as an aluminum alloy, is formed in a rectangular plate shape having a length direction along the vehicle front-rear direction in plan view, and the storage battery pack 18 is supported by a battery frame 19.

The battery frame 19 is, for example, configured in a substantially rectangular framework shape having a length direction along the vehicle front-rear direction in plan view, and is integrally configured (integrated) including a left-right pair of side frames (hereafter referred to as "rockers") 21 that extend along the vehicle front-rear direction at each vehicle width direction outside of the storage battery pack 18, a front cross member 19F that connects front ends of the left-right pair of rockers 21 together, and a rear cross member 19R that connects rear ends of the left-right pair of rockers 21 together.

The battery frame 19 is, for example, formed by performing extrusion molding of a material such as an aluminum alloy, a magnesium alloy, or the like. Note that the configuration of the battery frame 19 may be varied as appropriate according to the shapes of the front module 13 and the rear module 15, and the manufacturing method may also be varied accordingly.

The rear module 15 includes a left-right pair of wheel arches 28 capable of accommodating wheels (omitted in the drawings) arranged at the vehicle width direction outside, and a support member 30 that connects the left-right pair of wheel arches 28 together and is capable of supporting a non-illustrated rear seat. Note that the wheel arches 28 and the support member 30 are, similarly to the front module 13, molded into a single body by die-casting using a material such as an aluminum alloy, a magnesium alloy, or the like.

Next, description follows regarding relevant portions of the vehicle lower section structure 12 of the present exemplary embodiment.

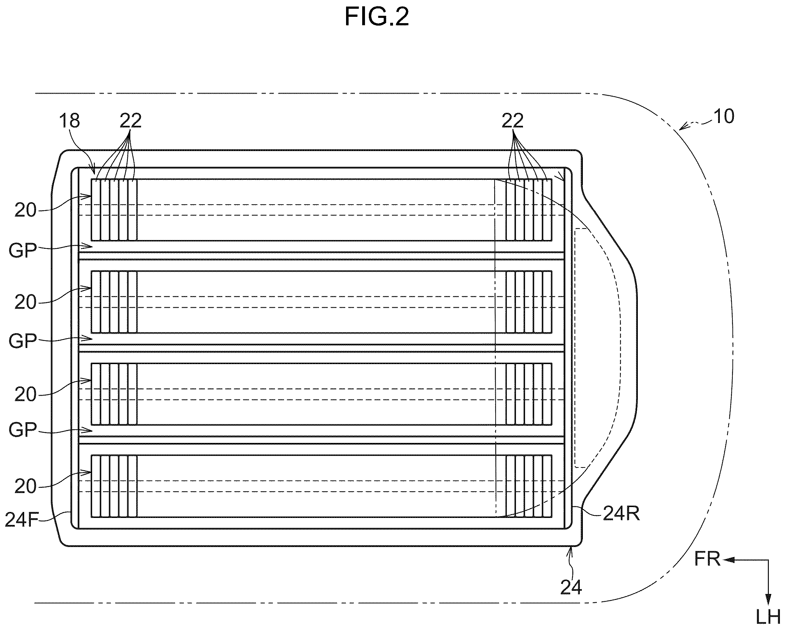

Fig. 2 is a partial schematic plan view illustrating the vehicle 10 including the vehicle lower section structure 12 of the present exemplary embodiment. As illustrated in Fig. 2, the storage battery pack 18 is installed to the vehicle 10. The storage battery pack 18 includes plural (e.g., four in the present exemplary embodiment) storage battery modules 20. The plural storage battery modules 20 are arranged alongside each other in the vehicle width direction. Gaps GP are configured between the storage battery modules 20. There are four of the storage battery modules 20 in the present exemplary embodiment, and so this means that there are three of the gaps GP configured between the storage battery modules 20.

The storage battery modules 20 each include plural storage battery cells 22. The plural storage battery cells 22 are arranged in each of the storage battery modules 20 in a row along the vehicle front-rear direction. Namely, the storage battery pack 18 is configured by plural storage battery modules 20 arranged alongside each other in a row along the vehicle width direction, with each of the storage battery modules 20 including plural storage battery cells 22 arranged in a row along the vehicle front-rear direction.

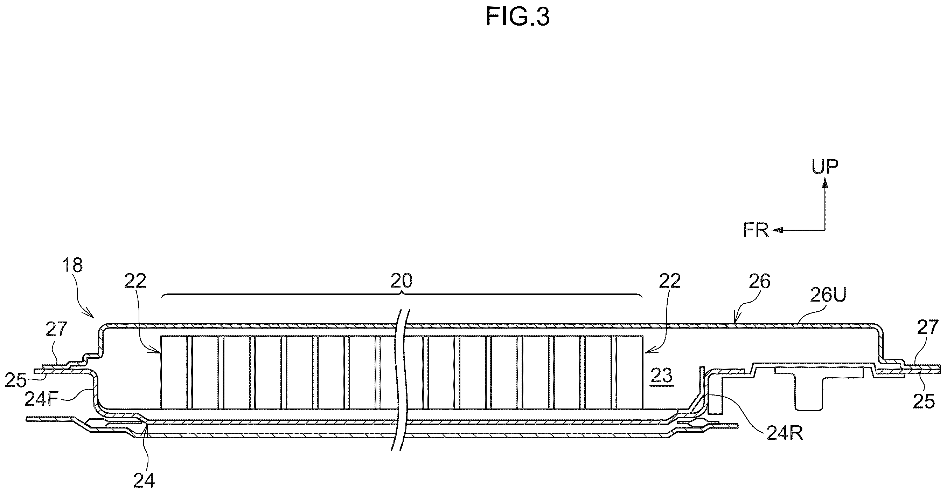

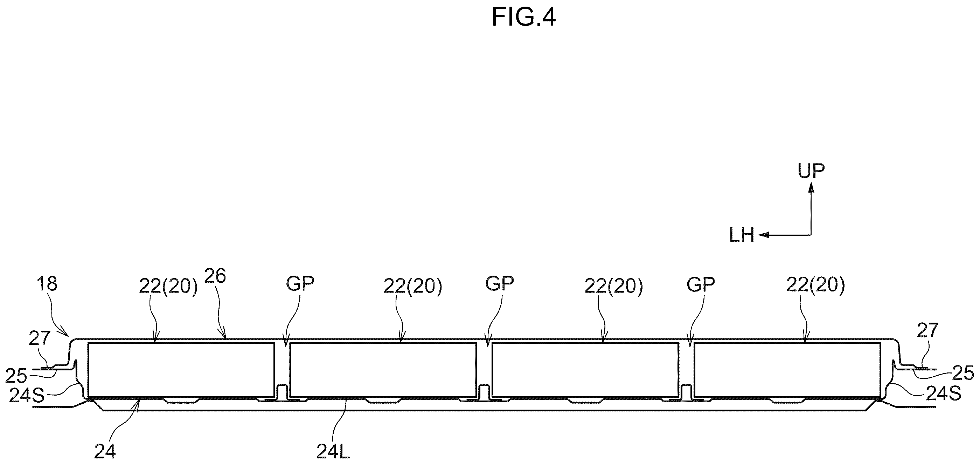

Fig. 3 is a cross-section of the vehicle lower section structure 12 illustrated in Fig. 2 when sectioned along the vehicle front-rear direction, and Fig. 4 is a cross-section of the vehicle lower section structure 12 illustrated in Fig. 2 when sectioned along the vehicle width direction. As illustrated in Fig. 3 and Fig. 4, the storage battery pack 18 includes a lower case 24 and an upper cover 26. Note that the upper cover 26 is omitted from illustration in Fig. 2. Moreover, the lower case 24 and the upper cover 26 are illustrated with simplified profiles in the line drawing of Fig. 4.

As illustrated in Fig. 3 and Fig. 4, the storage battery pack 18 includes the lower case 24 and the upper cover 26. The lower case 24 is a member provided with a box-shaped housing section 23 capable of accommodating the storage battery modules 20, and includes a lower plate 24L, a front plate 24F, a rear plate 24R, and a left-right pair of side plates 24S.

The lower plate 24L is a plate-shaped member that supports the storage battery modules 20 from below. The front plate 24F and the rear plate 24R are plate-shaped members provided so as to project upward respectively from a front end portion and a rear end portion of the lower plate 24L, and the side plates 24S are plate-shaped members provided so as to project upward from the two vehicle width direction sides of the lower plate 24L. The upper face of the lower case 24 is open, and a flange (first flange) 25 juts out from the peripheral edge of the lower case 24 toward the housing section 23 outside.

Note that a shared panel 46 extended in the vehicle front-rear direction and the vehicle width direction is provided at a lower side of the storage battery pack 18. The shared panel 46 is formed from a metal sheet, such as an aluminum alloy sheet, a steel sheet, or the like and, further to the vehicle width direction outside than the storage battery pack 18. The shared panel 46 is connected to the respective sides of the pair of rockers 21 (see Fig. 1) that extend along the vehicle front-rear direction and configure vehicle framework members. The lower face of the storage battery pack 18 is accordingly covered by the shared panel 46, and the storage battery modules 20 are protected by the shared panel 46 from foreign objects and the like coming from the road surface.

The upper cover 26 is a lid-shaped member for closing off the upper face of the lower case 24 and is configured so as to contain the housing section 23 together with the lower case 24. The upper cover 26 is configured similarly to the lower case 24, and includes an upper plate 26U, a front plate 26F, a rear plate 26R, and a left-right pair of side plates 26S. Note that the upper plate 26U is a plate-shaped member covering the storage battery modules 20 from above.

Moreover, the lower face of the upper cover 26 is open, and a flange (second flange) 27 juts out from the peripheral edge of the upper cover 26 toward the outside of the housing section 23. In a state aligned with the flange 25 formed to the lower case 24, the flange 27 is able to be joined thereto through a join section 29, thereby the storage battery pack 18 being configured by the lower case 24 and the upper cover 26.

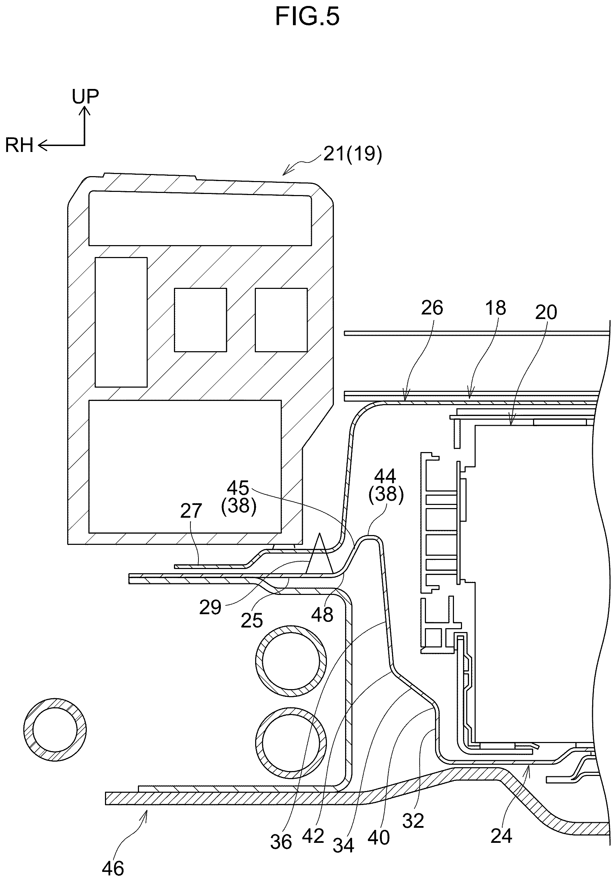

Fig. 5 illustrates an end view when sectioned along line A-A in Fig. 1. As illustrated in Fig. 5, the side plates 24S of the lower case 24 include a vertical wall portion 32, inclined portions 34 and 36, and an upward protrusion (wall portion) 38. The vertical wall portion 32 is formed to a lower portion of the side plate 24S of the lower case 24, and projects upward from an outer edge of the lower plate 24L. The inclined portion 34 is formed at the upper side of the vertical wall portion 32, with the vertical wall portion 32 and the inclined portion 34 connected together through a bent portion 40.

The inclined portion 34 is formed inclined toward the vehicle width direction outside and diagonally upward from a start point of the bent portion 40. The inclined portion 36 is formed at the upper side of the inclined portion 34, and the inclined portion 34 and the inclined portion 36 are connected through a bent portion 42. The inclined portion 36 is formed inclined toward the vehicle width direction outside and diagonally upward from a start point of the bent portion 42. Note that the inclined portion 36 forms a smaller angle with respect to vertical than the inclined portion 34.

Moreover, an upward protrusion 38 is provided at an upper end of the inclined portion 36. The upward protrusion 38 includes an inflection point 44, and an inclined portion 45 formed so as to be folded back diagonally downward and extend toward the vehicle width direction outside, with the inflection point 44 serving as an apex portion. Namely, the upward protrusion 38 includes the inclined portion 36, the inflection point 44, and the inclined portion 45, and is formed such that the inclined portion 45 and the inclined portion 36 opposing each other.

The upward protrusion 38 and the flange 25 are connected together through a bent portion 48. The flange 25 juts toward the vehicle width direction outside with the bent portion 48 as a start point, and is joined to the flange 27 of the upper cover 26 through the join section 29.

The upward protrusion 38 is formed so as to project further upward than the flange 25. The upward protrusion 38 is formed so as to be folded back in the vehicle height direction about the inflection point 44, and is formed in a state in which the inclined portion 45 and the inclined portion 36 form two overlapping layers in a side view. The upward protrusion 38 is also formed so as to overlap with the join section 29 in the side view of the storage battery pack 18.

### Operation and Effects of Vehicle Lower Section Structure

Next, description follows regarding the operation and advantageous effects of the vehicle lower section structure according to the present exemplary embodiment.

In the vehicle 10 applied with the vehicle lower section structure 12 of the present exemplary embodiment, as illustrated in Fig. 1, the storage battery modules 20 are configured by the plural storage battery cell 22, as illustrated in Fig. 2. The storage battery cells 22 are arranged in a row along the vehicle front-rear direction of each of the storage battery modules 20, and the storage battery modules 20 are arranged alongside each other in the vehicle width direction.

This thereby enables the plural storage battery cell 22 to be arranged efficiently in the vehicle front-rear direction and in the vehicle width direction. In particular, the array direction of the storage battery cells 22 in each of the storage battery modules 20 being the vehicle front-rear direction enables a greater number of the storage battery cells 22 to be placed in a single row compared to configurations in which the storage battery cells 22 are arrayed in the vehicle width direction.

In the present exemplary embodiment, the storage battery pack 18 housing the plural storage battery cells 22 includes the lower case 24 and the upper cover 26, and is configured by joining the flange 25 formed to the outer edge of the side plates 24S of the lower case 24 to the flange 27 formed to the outer edge of the side plates 26S of the upper cover 26 through the join section 29.

In the present exemplary embodiment, the upward protrusion 38 is arranged in the vehicle width direction so as to lie between the join section 29 where the lower case 24 and the upper cover 26 are joined, and a storage battery module 20, with the upward protrusion 38 being provided so as to overlap with the join section 29 in a side view of the storage battery pack 18.

The join section 29 where the lower case 24 and the upper cover 26 are joined may be cut, for example during maintenance of the storage battery pack 18 or the like. When this is performed, a cutter blade is inserted between the flange 25 of the lower case 24 and the flange 27 of the upper cover 26, with the cutter blade possibly intruding past the join section 29 between the lower case 24 and the upper cover 26 and into the housing section 23 side of the storage battery pack 18.

To address this issue, the upward protrusion 38 is provided in the present exemplary embodiment at a position in the vehicle width direction between the join section 29 where the lower case 24 and the upper cover 26 are joined, and the storage battery module 20. Therefore, in the present exemplary embodiment, a cutter blade for cutting the join section 29 between the lower case 24 and the upper cover 26 would hit the upward protrusion 38 provided to the lower case 24 if an attempt was made to intrude the cutter blade into the housing section 23 side of the storage battery pack 18, restricting movement of the cutter blade to the housing section 23 side. Accordingly, that in the present exemplary embodiment, the cutter blade for cutting the join section 29 may be avoided from intruding into the housing section 23 side, enabling damage to the storage battery modules 20 to be avoided.

A specific description follows regarding the upward protrusion 38.

In the present exemplary embodiment, the upward protrusion 38 is provided to an upper end portion of the side plates 24S of the lower case 24, and is formed so as to fold back in the vehicle height direction, with the inflection point 44 provided further upward than the join section 29 between the lower case 24 and the upper cover 26. Moreover, the upward protrusion 38 includes the inclined portion 36, the inflection point 44, and the inclined portion 45, and is formed with the inclined portion 45 and the inclined portion 36 opposing each other. Namely, in the present exemplary embodiment, the upward protrusion 38 is configured such that two side plates are overlapped in a side view of the storage battery pack 18. Therefore,, damage to the storage battery modules 20 may be further avoided in the present exemplary embodiment.

Moreover, in the present exemplary embodiment, the upward protrusion 38 provided to the upper end portion of the side plates 24S of the lower case 24 is folded back in the vehicle height direction and connected to the flange 25. This means that the upward protrusion 38 is formed in a state in which a gap is provided in the vehicle width direction. Therefore, in the present exemplary embodiment, when collision load is input along the vehicle width direction during a collision to the side of the vehicle 10 (hereafter "during a vehicle side impact"), the upward protrusion 38 is crushed along the vehicle width direction. This enables collision energy to be absorbed in the present exemplary embodiment, and the collision load input to the side of the storage battery module 20 may be reduced as a result thereof.

Moreover, in the present exemplary embodiment, the upward protrusion 38 is provided to the upper end portion of the lower case 24. During assembly of the storage battery pack 18, the upper cover 26 is joined the lower case 24 from above in a state in which the storage battery modules 20 have been housed inside the lower case 24. The present exemplary embodiment with the upward protrusion 38 provided to the upper end portion of the lower case 24 is more preferable from the perspective of ease of assembly compared to cases in which, although not illustrated in the drawings, a downward protrusion is provided on the upper cover 26 side.

Note that because providing a wall portion to overlap with the join section 29 between the lower case 24 and the upper cover 26 in a side view of the storage battery pack 18 is sufficient, there is no limitation to the protrusion being provided at the lower case 24 side, and a downward protrusion may be provided on the upper cover 26 side.

By forming such a wall portion to the lower case 24 or the upper cover 26 in this manner, the present exemplary embodiment is able to reduce the number of components compared to cases in which a wall portion is provided as a separate member to the lower case 24 or the upper cover 26. Obviously, such a wall portion may also be provided by a separate member to the lower case 24 or the upper cover 26.

Although the present disclosure has been described by way of an exemplary embodiment, the present disclosure is not limited to such an exemplary embodiment, and obviously an exemplary embodiment may be appropriately combined with various modified examples, and various embodiments may be implemented withing a range of the spirit of the present disclosure.

## Claims

1. A vehicle lower section structure comprising:
a battery case installed to a vehicle lower section, wherein the battery case including
a lower case configuring a housing section for housing a battery module, and
an upper cover configuring the housing section together with the lower case;
a first flange that is formed at an outer edge of the lower case so as to extend toward the outside of the housing section;
a second flange that is formed at an outer edge of the upper cover so as to extend toward the outside of the housing section and that is joined to the first flange; and
a wall portion that is arranged between a join section where the first flange and the second flange are joined and the battery module, and that overlaps with the join section in a side view of the battery case.

2. The vehicle lower section structure of claim 1, wherein the wall portion is formed at the lower case or to the upper cover.

3. The vehicle lower section structure of claim 1 or 2, wherein the wall portion is configured by an upward protrusion that is provided at an upper end portion of the lower case and that is formed so as to fold back in the vehicle height direction with an inflection point provided further upward than the join section.
